(19) Europäisches Patentamt
European Patent Office
Office européen des brevets

(11) EP 4 023 458 B1

(12) **EUROPEAN PATENT SPECIFICATION**

(45) Date of publication and mention of the grant of the patent:
**19.11.2025 Bulletin 2025/47**

(21) Application number: **20859258.4**

(22) Date of filing: **28.08.2020**

(51) International Patent Classification (IPC):
***B60C 1/00*** (2006.01) ***C08C 19/25*** (2006.01)
***C08K 5/01*** (2006.01) ***C08L 9/00*** (2006.01)
***C08L 91/06*** (2006.01)

(52) Cooperative Patent Classification (CPC):
(C-Sets available)
**C08L 91/08; B60C 1/0016; B60C 1/0025; C08C 19/22; C08C 19/25; C08C 19/44; C08F 236/10; C08J 3/246;** C08J 2315/00; C08J 2407/00; C08J 2409/06; C08J 2491/08
(Cont.)

(86) International application number:
**PCT/JP2020/032664**

(87) International publication number:
**WO 2021/039985 (04.03.2021 Gazette 2021/09)**

(54) **POLYMER COMPOSITION, CROSS-LINKED PRODUCT AND TIRE**
POLYMERZUSAMMENSETZUNG, VERNETZTES PRODUKT UND REIFEN
COMPOSITION POLYMÈRE, PRODUIT RÉTICULÉ ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2019 JP 2019158854**

(43) Date of publication of application:
**06.07.2022 Bulletin 2022/27**

(73) Proprietor: **ENEOS Materials Corporation**
**Tokyo 105-7109 (JP)**

(72) Inventor: **INOUE, Masaaki**
**Tokyo 105-8640 (JP)**

(74) Representative: **TBK**
**Bavariaring 4-6**
**80336 München (DE)**

(56) References cited:
**WO-A1-2018/110409**
**WO-A1-2018/110412**
**JP-A- 2005 139 326**
**JP-A- 2017 137 436**
**JP-A- 2017 145 342**
**JP-B2- H0 117 064**
**US-A1- 2017 233 562**
**US-A1- 2019 264 012**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 236/10, C08F 4/48;**
**C08L 15/00, C08L 7/00, C08L 91/08, C08K 3/36, C08K 3/04, C08K 5/548, C08K 5/09, C08K 3/22, C08K 5/47, C08K 5/31, C08K 5/18;**
**C08L 15/00, C08L 9/06, C08L 7/00, C08L 91/08, C08K 3/36, C08K 3/04, C08K 5/548, C08K 5/09, C08K 3/22, C08K 5/47, C08K 5/31, C08K 5/18;**
C08F 236/06, C08F 212/08

## Description

Cross-Reference to Related Applications

The present application is based on Japanese Patent Application No. 2019-158854, filed on August 30, 2019.

Technical Field

The present disclosure relates to a polymer composition, a cross-linked product and a tire.

Background Art

Polymers having a carbon-carbon unsaturated bond such as conjugated diene-based polymers have been widely used as rubber material. In particular, conjugated diene-based polymers (for example, styrene-butadiene copolymers) exhibit various good properties such as thermal resistance, wear resistance, mechanical strength, and molding processability, and thus have been widely used in various industrial products such as pneumatic tires, anti-vibration rubber, and hoses. Further, it has been proposed to obtain a cross-linked rubber having high strength and low wear by using a hydrogenated conjugated diene-based polymer in which a part of the unsaturated bonds of the conjugated diene-based polymer is hydrogenated (see, e.g., Patent document 1). US2019264012 discloses a rubber composition for a tire that can improve processability while maintaining reinforcing property.

Citation List

Patent Document

Patent document 1: WO 2015/064646

Summary of Invention

Technical Problem

Although use of a highly saturated diene-based polymer enables to obtain a rubber having a high strength and low wear, there is a concern that the processability of the polymer composition is reduced due to increased crystallinity of the polymer. Accordingly, improvement in processability of the polymer composition is required, while not impairing the strength and the wear resistance of the rubber formed from a highly saturated diene-based polymer.

The present disclosure has been made in view of the problem described above, and a main object of the present disclosure is to provide a polymer composition having excellent processability, while maintaining high strength and high wear resistance of the rubber.

Solution to Problem

As a result of diligent studies to solve the above-described problem in the prior art, the present discloser has found that inclusion of a highly saturated diene-based polymer and a paraffin wax having a melting point above a predetermined temperature in a polymer composition for producing a rubber can solve the problem. Specifically, the following means are provided by the present disclosure.

[1] A polymer composition including:
a polymer (A) having, when composition ratios (molar ratios) of a structural unit represented by formula (1), a structural unit represented by formula (2), a structural unit represented by formula (3), and a structural unit represented by formula (4) in the polymer (A) are p, q, r, and s, respectively, a value $\alpha$ represented by formula (i) of 0.60 or more:

$$\alpha = (p+(0.5\times r))/(p+q+(0.5\times r)+s) \quad ... \quad (i)$$

[F1]

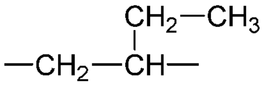

(1)

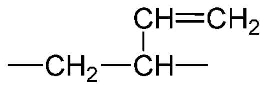

(2)

$$-CH_2-CH_2-$$

(3)

$$-CH_2-CH=CH-CH_2-$$

(4)

with a weight average molecular weight (Mw) of $1.0 \times 10^5$ to $2.0 \times 10^6$ in terms of polystyrene measured by gel permeation chromatography, and a carbon-carbon unsaturated bond;
a paraffin wax (B) having a melting point of 75°C or more; and
wherein the polymer (A) is obtained by hydrogenation of a conjugated diene-based polymer, which is a random copolymer of a structural unit derived from a conjugated diene compound and a structural unit derived from an aromatic vinyl compound.

[2] A cross-linked product produced by using a polymer composition including the above-described polymer (A) and the above-described paraffin wax (B).
[3] A tire having one or both of a tread and a sidewall formed from a polymer composition including the above-described polymer (A) and the above-described paraffin wax (B).

Advantageous Effects of Invention

According to the present disclosure, a polymer composition including a highly saturated diene-based polymer and a paraffin wax having a melting point of 70°C or more can have improved processability, while maintaining high strength and high wear resistance of a cross-linked product made from the polymer composition.

Description of Embodiments

The matters relating to the implementation of the present disclosure will be described in detail below.

<Polymer composition>

A polymer composition of the present disclosure includes a highly saturated diene-based polymer and a paraffin wax.

<Highly saturated diene-based polymer>

The highly saturated diene-based polymer (hereinafter, also referred to as polymer (A)) included in the polymer composition of the present disclosure is a polymer having a carbon-carbon unsaturated bond and can be cross-linked by vulcanization.
When composition ratios (molar ratios) of a structural unit represented by formula (1), a structural unit represented by formula (2), a structural unit represented by formula (3), and a structural unit represented by formula (4) in the polymer (A) are p, q, r, and s, respectively, the polymer has a value $\alpha$ represented by formula (i) of 0.60 or more.

$$\alpha = (p+(0.5\times r))/(p+q+(0.5\times r)+s) \quad ... \quad (i)$$

The polymer (A) can be produced by a method including, for example, a step of polymerizing a monomer containing butadiene to obtain a conjugated diene-based polymer having an active terminal (polymerization step), and a step of hydrogenating the conjugated diene-based polymer (hydrogenation step). Further, the method may optionally include a step of modifying a terminal of the conjugated diene-based polymer obtained by the polymerization step (modification step). Specifically, the production can be performed by appropriately changing, the molecular weight, the aromatic vinyl compound amount, the vinyl bond content, the hydrogenation ratio, the type of modifier, and the like to match the purpose of use in accordance with the method described in WO 2014/133097. In addition, the production can be also performed by copolymerizing a diene-based monomer such as 1,3-butadiene with a non-conjugated olefin in accordance with the method described in WO 2015/190073. The polymer (A), which is hydrogenated conjugated diene-based polymer, and a method for producing the polymer (A) will now be described in detail.

(Polymerization step)

The polymer (A) is a hydrogenated conjugated diene-based polymer and the conjugated diene-based polymer before hydrogenation is a copolymer having a structural unit derived from a conjugated diene compound and a structural unit derived from an aromatic vinyl compound. The present polymerization step is a step of obtaining a conjugated diene-based polymer having an active terminal by polymerizing a monomer containing a conjugated diene compound and an aromatic vinyl compound.

In the polymerization, as the conjugated diene compound, 1,3-butadiene can be preferably used. Further, in the polymerization, a conjugated diene compound other than 1,3-butadiene may be used in addition to 1,3-butadiene. It is preferable that such a conjugated diene compound be copolymerizable with 1,3-butadiene and an aromatic vinyl compound. Specific examples thereof include isoprene, 2,3-dimethyl-1,3-butadiene, and 1,3-pentadiene. Among these, isoprene is preferable as the conjugated diene compound other than 1,3-butadiene. One type of the conjugated diene compound may be used alone, or two or more types may be used in combination.

Examples of the aromatic vinyl compound include styrene, 2-methylstyrene, 3-methylstyrene, 4-methylstyrene, α-methylstyrene, N,N-dimethylaminoethylstyrene, and diphenylethylene. Among these, the aromatic vinyl compound is particularly preferably one or more compounds selected from styrene and α-methylstyrene. One type of the aromatic vinyl compound can be used alone, or two or more types may be used in combination.

The conjugated diene-based polymer obtained by the present polymerization step is a copolymer of a conjugated diene compound and an aromatic vinyl compound. From the viewpoint of obtaining a cross-linked product having a high strength, a copolymer of a conjugated diene compound and an aromatic vinyl compound is preferred. Alternatively, the copolymer may be a polymer obtained by using 1,3-butadiene and a conjugated diene compound other than 1,3-butadine. In particular, it is preferable that the conjugated diene-based polymer be a copolymer of 1,3-butadiene and styrene from the viewpoint of having high living properties in anionic polymerization.

In the copolymer of the conjugated diene compound and the aromatic vinyl compound, from the viewpoint of improving the low hysteresis loss properties of a cross-linked rubber, the amount of the aromatic vinyl compound used is preferably 10 to 50% by mass with respect to the total amount of the monomers used for the polymerization. By keeping the content of the aromatic vinyl compound within the above range, both productivity and strength can be achieved. The amount of the aromatic vinyl compound used is more preferably 15% by mass or more, with respect to the total amount of the monomers used for the polymerization. The amount of the aromatic vinyl compound used is more preferably 45% by mass or less, and further preferably 40% by mass or less, with respect to the total amount of the monomers used for the polymerization.

It is preferable that the monomers used in the production of the conjugated diene-based polymer before hydrogenation include 50 to 90 parts by mass of butadiene, 10 to 50 parts by mass of an aromatic vinyl compound, and 0 to 40 parts by mass of a conjugated diene compound other than butadiene with respect to 100 parts by mass of the total amount of the monomers used in the polymerization. Using such contents is preferable in terms of achieving both the productivity and strength of the cross-linked rubber.

Any of the conjugated diene compounds and the aromatic vinyl compounds mentioned as examples above has the same action that enables to obtain a conjugated diene-based polymer having an active terminal. Therefore, even those compounds not described in the following Examples may be used in this disclosure.

In the polymerization, monomers other than the conjugated diene-based compounds and the aromatic vinyl compounds may be used. Examples of the other monomers include acrylonitrile, methyl (meth)acrylate, and ethyl (meth) acrylate. The amount of other monomers used with respect to the total amount of monomers used in polymerization is preferably 40% by mass or less, more preferably 30% by mass of less, and still more preferably 20% by mass or less.

As the polymerization method for obtaining the conjugated diene-based polymer according to the present disclosure, any of a solution polymerization method, a gas phase polymerization method, and a bulk polymerization method may be used, and the solution polymerization method is particularly preferred. Further, as the polymerization type, any of a batch type or a continuous type may be used. In the case of using the solution polymerization method, specific examples of the polymerization method include a method of polymerizing a monomer containing a conjugated diene compound in an organic solvent in the presence of a polymerization initiator and a randomizer used on an as needed basis.

As the polymerization initiator, it is preferable that at least one of an alkali metal compound and an alkali earth metal compound be used. As the alkali metal compound and the alkali earth metal compound, one usually used as an initiator of anionic polymerization may be used. Specific examples thereof include an alkyllithium such as methyllithium, ethyllithium, n-propyllithium, n-butyllithium, sec-butyllithium, and t-butyllithium; 1,4-dilithiobutane, phenyllithium, stilbenelithium, naphthyllithium, naphthylsodium, naphthylpotassium, di-n-butylmagnesium, di-n-hexylmagnesium, ethoxypotassium, and calcium stearate. Of these, a lithium compound is preferred.

Further, the polymerization reaction may be carried out in the presence of a compound (hereinafter, also referred to as compound (R)) obtained by mixing at least any of the above-described alkali metal compounds and alkali earth metal compounds with a compound having a functional group that interacts with silica (hereinafter, also referred to as compound

(C1)). By carrying out the polymerization in the presence of the compound (R), a functional group having interaction with silica can be introduced into the polymerization initiation terminal of the conjugated diene-based polymer. As used herein, the term "interaction" means that a covalent bond is formed between molecules, or an intermolecular force (e.g., an intermolecular electromagnetic force such as ion-dipole interaction, dipole-dipole interaction, a hydrogen bond, and Van der Waals force) that is weaker than a covalent bond is formed. Further, the phrase "functional group having interaction with silica" means a group having at least one atom that interacts with silica, such as a nitrogen atom, a sulfur atom, a phosphorus atom, and an oxygen atom.

The compound (R) is preferably a reaction product of a lithium compound such as alkyllithium and a nitrogen-containing compound (secondary amine compound or the like). Specific examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tertbutyldimethylsilyl)piperazine, and 1,3-ditrimethylsilyl-1,3,5-triazinane. In the case of carrying out the polymerization in the presence of the compound (R), the compound (R) may be prepared by mixing an alkali metal compound or an alkali earth metal compound with the compound (C1) in advance, and the polymerization may be carried out by adding the prepared compound (R) to the polymerization system. Alternatively, the polymerization may be carried out by adding an alkali metal compound or an alkali earth metal compound and the compound (C1) to the polymerization system and mixing them in the polymerization system to prepare the compound (R).

The randomizer may be used to adjust a vinyl content (i.e., the amount of 1,2-vinyl bonds). Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. One type of the randomizer may be used alone, or two or more types may be used in combination.

The organic solvent used for polymerization may be an organic solvent that is inert to the reaction. For example, aliphatic hydrocarbons, alicyclic hydrocarbons, and aromatic hydrocarbons can be used. Of these, the organic solvent is preferably a hydrocarbon having 3 to 8 carbon atoms. Specific examples of the hydrocarbon having 3 to 8 carbon atoms include n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethylbenzene, heptane, cyclopentane, methylcyclopentane, methylcyclohexane, 1-pentene, 2-pentene, and cyclohexene. These organic solvents may be used either alone or in combination of two or more.

When using the solution polymerization method, the monomer concentration in the reaction solvent is preferably 5 to 50% by mass, and more preferably 10 to 30% by mass, since such a monomer concentration enables a balance to be maintained between productivity and polymerization controllability. The polymerization reaction temperature is preferably -20°C to 150°C, more preferably 0 to 120°C, and particularly preferably 20 to 100°C. It is preferable to carry out the polymerization reaction under a pressure sufficient to substantially maintain the monomer to be in a liquid phase. Such a pressure may be achieved by a method for pressurizing the inside of the reaction vessel using gas that is inert to the polymerization reaction.

The vinyl content of the conjugated diene-based polymer obtained by the above polymerization is preferably 5 to 70 % by mass, more preferably 10 to 60 % by mass, and further preferably 15 to 50 % by mass. The vinyl content less than 5 % by mass tends to decrease the grip properties, and the vinyl content more than 70 % by mass tends to deteriorate wear resistance. The vinyl content is a value measured by a $^1$H-NMR.

The conjugated diene-based polymer before hydrogenation of the present disclosure is a random copolymer of a structural unit derived from a conjugated diene compound and a structural unit derived from an aromatic vinyl compound. In this case, the dispersibility of filler can be favorably improved. Incidentally, the random copolymer may have a block portion made of a conjugated diene compound at one terminal or both terminals.

<Modification step>

The modification step is a step of reacting the active terminal of the conjugated diene-based polymer obtained in the above polymerization step with a compound having a functional group that interacts with silica (hereinafter, also referred to as compound (C2)). By the step, the functional group having an interaction with silica can be introduced into the polymerization termination terminal of the conjugated diene-based polymer. In the present specification, the active terminal means a portion other than the structure derived from a monomer having a carbon-carbon double bond (more specifically, a metal terminal), which is present at an end of the molecular chain.

The conjugated diene-based polymer used in the modification reaction (hereinafter, also referred to as terminal modification reaction) in the present step may have an unmodified or modified polymerization initiation terminal as long as it has an active terminal. The compound (C2) is not particularly limited as long as it is a compound capable of reacting with the active terminal of the conjugated diene-based polymer. It is preferable that the compound have one or more functional

groups selected from the group consisting of an amino group, a group having a carbon-nitrogen double bond, a nitrogen-containing heterocyclic group, a phosphino group, an epoxy group, a thioepoxy group, a protected hydroxy group, a protected thiol group and a hydrocarbyloxysilyl group, capable of reacting with a polymerization active terminal. Specifically, as the compound (C2), at least one selected from the group consisting of a compound represented by formula (9), a compound represented by formula (10), a compound represented by formula (11), and a compound represented by formula (12) may be preferably used.

[F2]

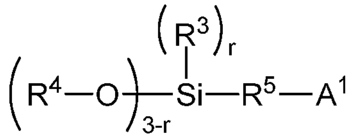

(9)

wherein, $A^1$ is a monovalent functional group having at least one atom selected from the group consisting of nitrogen, phosphorus, oxygen, sulfur and silicon, and bonding to $R^5$ through a nitrogen atom, a phosphorus atom, an oxygen atom, a sulfur atom, a silicon atom or a carbon atom in a carbonyl group, or a (thio)epoxy group; $R^3$ and $R^4$ are each independently a hydrocarbyl group; and $R^5$ is a hydrocarbylene group, and r is an integer of 0 to 2; in the case where a plurality of $R^3$ are present, the plurality of $R^3$ are the same group or different groups; in the case where a plurality of $R^4$ are present, the plurality of $R^4$ are the same group or different groups.

[F3]

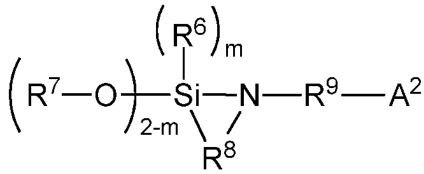

(10)

wherein, $A^2$ is a monovalent functional group having at least one atom selected from the group consisting of nitrogen, phosphorus, oxygen, sulfur and silicon, having no active hydrogen, and bonding to $R^9$ through a nitrogen atom, a phosphorus atom, an oxygen atom, a sulfur atom, or a silicon atom, or a hydrocarbyl group having 1 to 20 carbon atoms; $R^6$ and $R^7$ are each independently a hydrocarbyl group; $R^8$ is a hydrocarbylene group, $R^9$ is a single bond or a hydrocarbylene group and m is 0 or 1; in the case where a plurality of $R^7$ are present, the plurality of $R^7$ are the same group or different groups.

[F4]

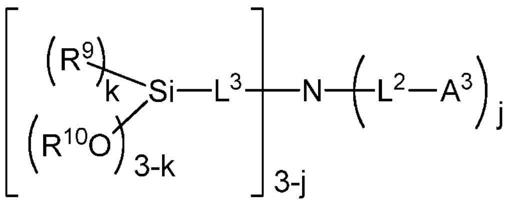

(11)

wherein $A^3$ represents a monovalent group bonding to $L^2$ through an imino group, an amido group, a(thio)carbonyl group, a (thio)carbonyloxy group, a sulfide group or a polysulfide group, or a protected primary amino group, a protected secondary amino group, a tertiary amino group, a nitrile group, a pyridyl group, a (thio)epoxy group, a (thio)isocyanate group, a (thio) formyl group, a (thio)carboxylic acid ester group, a metal salt of (thio)carboxylic acid ester group, $-COX^1$ ($X^1$: a halogen atom), an imidazolyl group, or a group represented by formula (11a); $L^2$ and $L^3$ are each independently a single bond or a hydrocarbylene group having 1 to 20 carbon atoms, and $R^9$ and $R^{10}$ are each independently a hydrocarbyl group; k is an integer of 0 to 2, and j is 0 or 1; in the case where a plurality of identical symbols are present in the formula for each of the symbols $R^9$, $R^{10}$ and $L^3$, the groups represented by the symbols are the same or different groups from each other; in the case where a plurality of k are present in the formula, the plurality of k are the same number or different numbers.

[F5]

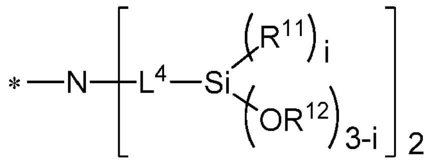

(11a)

wherein $L^4$ is a single bond or a hydrocarbylene group having 1 to 20 carbon atoms, and $R^{11}$ and $R^{12}$ are each independently a hydrocarbyl group; i is an integer of 0 to 3; "*" indicates a site that binds to $L^2$; For each of the symbols $R^{11}$, $R^{12}$ and $L^4$, the groups represented by the symbols are the same group or different group from each other; a plurality of i in the formula are the same number or different numbers.

[F6]

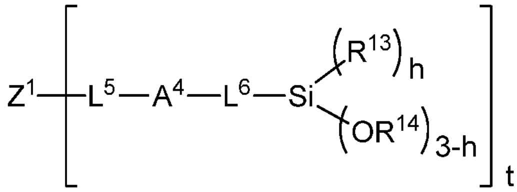

(12)

wherein $A^4$ is an imino group, an amido group, a (thio)carbonyl group or a (thio)carbonyloxy group, $Z^1$ is a t-valent group having or not having a nitrogen atom and having 1 to 20 carbon atoms, $L^5$ is a single bond or a hydrocarbylene group having 1 to 20 carbon atoms, $L^6$ is a hydrocarbylene group having 1 to 20 carbon atoms, and $R^{13}$ and $R^{14}$ are each independently a hydrocarbyl group; h is 0 or 1, and t is 2 or 3; for each of the symbols $R^{14}$, $L^5$, $L^6$ and $A^4$, the groups represented by the symbols are the same group or different groups from each other; the plurality of h in the formula are the same number or different numbers.

In the above formulas (9) and (10), it is preferable that the hydrocarbyl group of $R^3$, $R^4$, $R^6$, $R^7$ and $A^2$ be a linear or branched alkyl group having 1 to 20 carbon atoms, a cycloalkyl group having 3 to 20 carbon atoms, or an aryl group having 6 to 20 carbon atoms.

It is preferable that the hydrocarbylene group of $R^5$ and $R^9$ be a linear or branched alkanediyl group having 1 to 20 carbon atoms, a cycloalkylene group having 3 to 20 carbon atoms, or an arylene group having 6 to 20 carbon atoms.

From the viewpoint of enhancing the reactivity with the conjugated diene-based polymer, it is preferable that r and m be 0 or 1.

In the case where $A^1$ is the above monovalent functional group, it is preferable that at least one atom selected from the group consisting of nitrogen, phosphorus, oxygen, sulfur and silicon possessed by $A^1$, and at least one atom selected from the group consisting of nitrogen, phosphorus, oxygen, sulfur and silicon possessed by $A^2$ be not bonded to an active hydrogen and be protected by a protecting group (e.g., trisubstituted hydrocarbylsilyl group). In the present specification, the active hydrogen means a hydrogen atom bonded to an atom other than a carbon atom, and preferably has a lower bond energy than the carbon-hydrogen bond of polymethylene. The protecting group is a functional group that converts $A^1$ and $A^2$ into a functional group that is inactive to a polymerization active terminal. The (thio)epoxy group includes an epoxy group and a thioepoxy group.

$A^1$ may be a group that can be turned into an onium ion by an onium salt producing agent. Since the compound (C2) has such a group ($A^1$), excellent shape retention can be imparted to the hydrogenated conjugated diene-based polymer. Specific examples of $A^1$ include a nitrogen-containing group with two hydrogen atoms of a primary amino group substituted by two protecting groups, a nitrogen-containing group with one hydrogen atom of a secondary amino group substituted by one protecting group, a phosphorus-containing group with two hydrogen atoms of a tertiary amino group, an imino group, a pyridyl group, or a primary phosphino group substituted by two protecting groups, a phosphorus-containing group with one hydrogen atom of a secondary phosphino group substituted by one protecting group, a group with a hydrogen atom of a tertiary phosphino group, an epoxy group, or a hydroxy group protected by a protecting group, a sulfur-containing group with a hydrogen atom of a thioepoxy group or a thiol group substituted by a protecting group, and a hydrocarbyl oxycarbonyl group. Among these, a group having a nitrogen atom is preferred from the viewpoint of good affinity with silica, and a nitrogen-containing group with two hydrogen atoms of a tertiary amino group or a primary amino group substituted with two protecting groups is more preferred.

In the above formula (11), examples of the hydrocarbylene group having 1 to 20 carbon atoms of $L^2$ and $L^3$ include a linear or branched alkanediyl group having 1 to 20 carbon atoms, a cycloalkylene group having 3 to 20 carbon

atoms, and an arylene group having 6 to 20 carbon atoms. Examples of the hydrocarbyl group of $R^9$ and $R^{10}$ include a linear or branched alkyl group having 1 to 4 carbon atoms and a cycloalkyl group having 3 or 4 carbon atoms. The (thio)carbonyl group includes a carbonyl group and a thiocarbonyl group, the (thio)carbonyloxy group includes a carbonyloxy group and a thiocarbonyloxy group, the (thio)isocyanate group includes an isocyanate group and a thioisocyanate group, the (thio) formyl group includes a formyl group and a thioformyl group, and the (thio)carboxylic acid ester group includes a carboxylic acid ester group and a thiocarboxylic acid ester group.

In the above formula (12), $Z^1$ is a divalent or trivalent group having 1 to 20 carbon atoms which may have a nitrogen atom, and preferably has a nitrogen atom. Examples of the hydrocarbylene group of $L^3$ having 1 to 20 carbon atoms and the hydrocarbylene group of $L^6$ having 1 to 20 carbon atoms include a linear or branched alkanediyl group having 1 to 20 carbon atoms, a cycloalkylene group having 3 to 20 carbon atoms, and an arylene group having 6 to 20 carbon atoms. Examples of the hydrocarbyl group of $R^{13}$ and $R^{14}$ include a linear or branched alkyl group having 1 to 4 carbon atoms and a cycloalkyl group having 3 or 4 carbon atoms.

As preferred specific examples of the compound (C2), examples of the compound represented by the above formula (9) include N,N-bis(trimethylsilyl)aminopropyl trimethoxysilane, N,N-bis(trimethylsilyl)aminopropyl methyl diethoxysilane, N,N',N'-tris(trimethylsilyl)-N-(2-aminoethyl)-3-aminopropyltriethoxysilane, 3-(4-trimethylsilyl-1-piperazino)propylmethyl dimethoxysilane, 3-glycidoxypropylmethyldimethoxysilane, and 3-glycidoxypropyltriethoxysilane; examples of the compound represented by the above formula (10) include 2,2-dimethoxy-1-(3-trimethoxysilylpropyl)-1,2-azacilolidine, 2,2-diethoxy-1-(3-trimethoxysilylpropyl)-1,2-azasiloridine, 2,2-dimethoxy-1-phenyl-1,2-azasiloridine, 1-trimethylsilyl-2,2-dimethoxy-1-aza-2-silacyclopentane, 2,2-dimethoxy-8-(4-methylpiperazinyl)methyl-1,6-dioxa-2-silacyclooctane, and 2-(2,2-dimethoxy-1,2-azasiloridine-1-yl)-N,N- diethylethane-1-amine; examples of the compound represented by the above formula (11) include N,N-bis(trimethoxysilylpropyl)aminopropyl-3-(1-imidazole), N,N-bis(triethoxysilylpropyl)aminopropyl-3-(1-imidazole), N,N-bis(trimethoxysilylpropyl)aminopropylmethyl diethylsilane, N,N,N-tris(triethoxysilylpropyl)amine, and N,N,N',N'-tetrakis(3-triethoxysilylpropyl)-1,3-diaminopropane; and examples of the compound represented by the above formula (12) include the following formulas (M-1) to (M-4):

[F7]

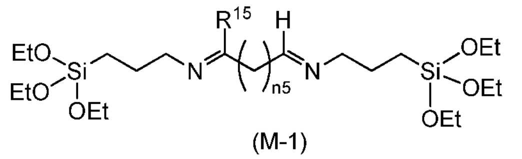

(M-1)

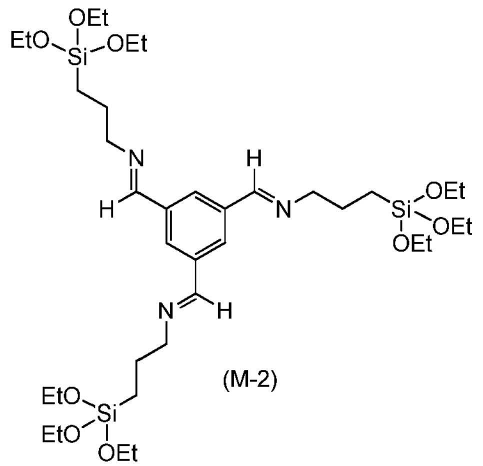

(M-2)

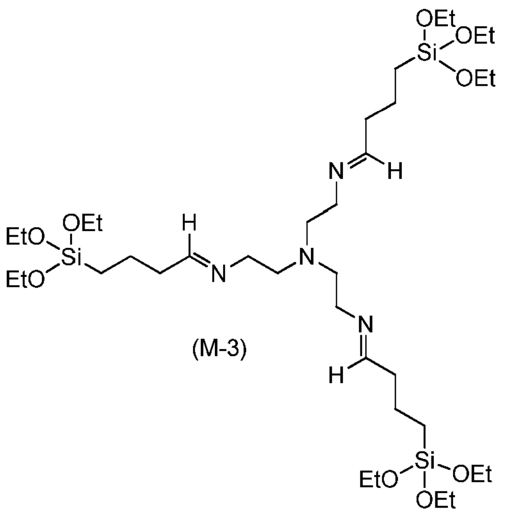

(M-3)

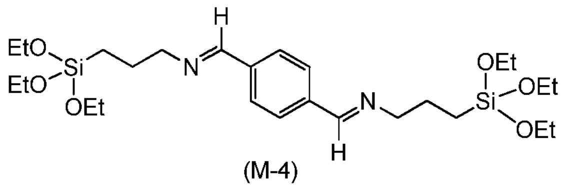

(M-4)

wherein in formula (M-1), $R^{15}$ represents a hydrogen atom or an alkyl group having 1 to 20 carbon atoms, and n5 is an integer of 1 to 10.

One type of the compound (C2) may be used alone, or two or more types may be used in combination.

The above-mentioned terminal modification reaction can be carried out as, for example, a solution reaction. This solution reaction may be carried out using a solution including an unreacted monomer after the completion of the polymerization reaction in the polymerization step, and may also be carried out after the conjugated diene-based polymer included in the solution is isolated and dissolved in an appropriate solvent such as cyclohexane. Further, the terminal

modification reaction may be carried out as either a batch type or a continuous type. On this occasion, the method of adding the compound (C2) is not particularly limited, and examples thereof include a method of adding the compound (C2) all at once, a method of dividedly adding the compound (C2), and a method of continuously adding the compound (C2).

The amount of the compound (C2) to be used in the terminal modification reaction may be appropriately set according to the type of the compound used in the reaction, being preferably 0.1 molar equivalents or more, and more preferably 0.3 molar equivalents or more, with respect to the metal atom of the polymerization initiator involved in the polymerization reaction. By setting the amount of the compound (C2) used to 0.1 molar equivalents or more, the modification reaction can be sufficiently promoted, and the dispersibility of the silica can be suitably improved.

The temperature of the terminal modification reaction is usually the same as the temperature of the polymerization reaction, preferably -20 to 150°C, more preferably 0 to 120°C, and particularly preferably 20 to 100°C. In the case where the temperature of the modification reaction is low, the viscosity of the modified conjugated diene-based polymer tends to increase. On the other hand, in the case where the temperature of the modification reaction is high, the polymerization active terminal tends to be deactivated. The reaction time of the modification reaction is preferably 1 minute to 5 hours, more preferably 2 minutes to 1 hour. In order to control the Mooney viscosity of the polymer in the terminal modification reaction, silicon tetrachloride, an epoxy-containing compound (for example, tetraglycidyl-1,3-bisaminomethylcyclohexane), etc. may be used together with the compound (C2).

<Hydrogenation step>

The hydrogenated conjugated diene-based polymer of the present disclosure can be obtained by hydrogenating the above-obtained modified or unmodified conjugated diene-based polymer. The hydrogenation reaction can be performed by any methods under any conditions, so long as a conjugated diene-based polymer having the desired hydrogenation ratio is obtained. Examples of those hydrogenation methods include a method involving the use of a catalyst containing an organometallic compound of titanium as a main component of a hydrogenation catalyst; a method involving the use of a catalyst containing an organic compound of iron, nickel, or cobalt and an organometallic compound such as an alkylaluminum; a method involving the use of an organic complex of an organometallic compound of, for example, ruthenium or rhodium; and a method involving the use of a catalyst including a carrier (e.g., carbon, silica, or alumina) on which a metal such as palladium, platinum, ruthenium, cobalt, or nickel is supported, and the like. Among the various methods, a method in which hydrogenation is carried out under mild conditions of low pressure and low temperature conditions using an organometallic compound of titanium alone, or a uniform catalyst composed of an organometallic compound of titanium and an organometallic compound of lithium, magnesium, and aluminum (JP 63-4841 A and JP 1-37970 A) is industrially preferable, hydrogenation selectivity for the double bond of butadiene is also high, and is suitable for the purpose of the present disclosure.

The hydrogenation of the modified conjugated diene-based polymer is carried out using a solvent that is inert to the catalyst and in which the conjugated diene-based polymer is soluble. Preferred solvents include aliphatic hydrocarbons such as n-pentane, n-hexane, and n-octane, alicyclic hydrocarbons such as cyclohexane and cycloheptane, aromatic hydrocarbons such as benzene and toluene, and ethers such as diethyl ether and tetrahydrofuran, which are used alone or as a mixture in which these solvents are a main component.

The hydrogenation reaction is generally carried out by holding the conjugated diene-based polymer at a predetermined temperature under a hydrogen or an inert atmosphere, adding a hydrogenation catalyst under stirring or non-stirring, and then increasing the pressure to a predetermined pressure by introducing hydrogen gas. The term "inert atmosphere" means an atmosphere that does not react with the substances involved in the hydrogenation reaction, and examples thereof include helium, neon, and argon. Air and oxygen are not preferable because they oxidize the catalyst and cause the catalyst to be deactivated. In addition, nitrogen is not preferable because it acts as a catalytic poison during the hydrogenation reaction and reduces the hydrogenation activity. In particular, it is most preferable that the hydrogenation reaction vessel has an atmosphere of hydrogen gas alone.

The hydrogenation reaction process for obtaining a hydrogenated conjugated diene-based polymer can be a batch process, a continuous process, or a combination thereof. When a titanocene diaryl compound is used as the hydrogenation catalyst, the titanocene diaryl compound may be added alone to the reaction solution as is, or may be added as a solution in an inert organic solvent. As the inert organic solvent used when the catalyst is used as a solution, various solvents that do not react with the substances involved in the hydrogenation reaction can be used. The inert organic solvent is preferably the same solvent as the solvent used for the hydrogenation reaction. An added amount of the catalyst is 0.02 to 20 mmol per 100 g of conjugated diene-based polymer before hydrogenation.

The hydrogenated conjugated diene-based polymer in the present disclosure has a value $\alpha$ represented by the following formula (i) of 0.60 or more.

$$\alpha = (p+(0.5\times r))/(p+q+(0.5\times r)+s) \quad ... \quad (i)$$

With $\alpha$ controlled to 0.60 or more, a cross-linked rubber having high strength and excellent wear resistance can be obtained. For this reason, $\alpha$ is preferably 0.65 or more, more preferably 0.75 or more, still more preferably 0.80 or more, and particularly preferably 0.85 or more. Also, $\alpha$ is preferably 0.99 or less. Incidentally, p, q, r and s are as described above.

The value $\alpha$ defined by the above formula (i) corresponds to the hydrogenation ratio of the hydrogenated conjugated diene-based polymer. For example, when $\alpha$ is 0.60, the hydrogenation ratio of the hydrogenated conjugated diene-based polymer is 60%. The hydrogenation ratio of the hydrogenated conjugated diene-based polymer can be adjusted based on the duration of the hydrogenation reaction and the like. The hydrogenation ratio can be measured by a $^1$H-NMR. When the polymer (A) is a polymer obtained by copolymerizing a diene monomer and a non-conjugated olefin, the value of $\alpha$ can be adjusted by changing the ratio of the monomers to be copolymerized.

In a preferable method of obtaining the hydrogenated conjugated diene-based polymer of the present disclosure, a monomer including butadiene is subjected to solution polymerization in the presence of an alkali metal compound, the modification step is carried out using the obtained polymer solution as it is, and then the hydrogenation step is carried out. Such a method is industrially useful. In this case, the hydrogenated conjugated diene-based polymer is isolated from the obtained solution through removal of the solvent therefrom. The polymer can be isolated by a known desolvation method, such as steam stripping, and then performing a drying operation, such as a heat treatment.

From the viewpoint of obtaining a vulcanized rubber more excellent in low fuel consumption performance, the polymer (A) preferably has one or more functional groups selected from the group consisting of an amino group, a nitrogen-containing heterocyclic group, a phosphino group, a hydroxyl group, a thiol group and a hydrocarbyloxysilyl group, and more preferably has one or more functional groups selected from the group consisting of an amino group, a nitrogen-containing heterocyclic group and a hydrocarbyloxysilyl group. It is particularly preferable that these functional groups be introduced into one end or both ends of the polymer (A) from the viewpoint of further enhancing the effect of improving the low fuel consumption performance.

The polymer (A) has a weight average molecular weight (Mw) of $1.0\times10^5$ to $2.0\times10^6$. The Mw less than $1.0\times10^5$ tends to decrease the wear resistance and low fuel consumption performance of the vulcanized rubber made from the polymer composition containing the polymer (A), and the Mw more than $2.0\times10^6$ tends to deteriorate the processability. The Mw is preferably $1.2\times10^5$ or more, more preferably $1.5\times10^5$ or more. The Mw is preferably $1.5\times10^6$ or less, more preferably $1.0\times10^6$ or less. The range of the Mw is preferably $1.O\times10^5$ to $1.5\times10^6$, more preferably $1.2\times10^5$ to $1.5\times10^6$, and still more preferably $1.5\times10^5$ to $1.0\times10^6$. As used herein, the weight average molecular weight is a value in terms of polystyrene measured by gel permeation chromatography (GPC).

<Paraffin wax>

The polymer composition of the present disclosure includes a paraffin wax having a melting point of 75°C or more (hereinafter, also referred to as paraffin wax (B)). By including the paraffin wax (B) together with the polymer (A) in the polymer composition, the processability of the polymer composition during kneading can be improved. Further, a film of paraffin wax (B) is formed on the surface of a vulcanized product (for example, a tire) made from the polymer composition, which is suitable because the ozone resistance of the vulcanized product can be improved.

The melting point of the paraffin wax (B) is 75°C or more, and preferably 79°C or more in that it can provide a higher effect of improving the processability of the polymer composition during kneading. Further, the melting point of the paraffin wax (B) is preferably 140°C or less, more preferably 130°C or less, and still more preferably 125°C or less, in order to suppress a reduction in processability of the polymer composition. On the other hand, with a melting point of the paraffin wax used in combination with the polymer (A) of less than 70°C, the effect of improving the processability of the polymer composition is insufficient. The melting point of paraffin wax is a value measured in accordance with JIS K2235: 1991, 5.3.

The paraffin wax (B) may contain at least one of a branched saturated hydrocarbon (isoparaffin) and a saturated cyclic hydrocarbon (cycloparaffin) in addition to a linear saturated hydrocarbon (normal paraffin) as long as the melting point is 75°C or more. Further, the paraffin wax (B) may contain microcrystalline wax having a relatively high content of isoparaffin or cycloparaffin. The proportion of the microcrystalline wax in the paraffin wax (B) is preferably 50% by mass or more, more preferably 60% by mass or more, with respect to the total amount of the microcrystalline wax (B).

The paraffin wax (B) is usually paraffinic hydrocarbons having 35 or more carbon atoms. The number of carbon atoms in the paraffin wax (B) is preferably 85 or less, more preferably 80 or less, from the viewpoint of suppressing a decrease in processability of the polymer composition and a decrease in rubber elasticity of the vulcanized product by addition of the paraffin wax (B). The paraffin wax (B) may contain paraffinic hydrocarbons having 45 or more carbon atoms. The proportion of the paraffinic hydrocarbons having 45 or more carbon atoms in the paraffin wax (B) is preferably 10% by mass or more, more preferably 20% by mass or more, with respect to the total amount of the paraffin wax (B).

Specific examples of the paraffin wax (B) include commercially available paraffin waxes such as Hi-Mic-2065 (melting point: 75°C), Hi-Mic-1070 (melting point: 80°C), Hi-Mic-1080 (melting point: 84°C), Hi-Mic-1090 (melting point: 88°C), and Hi-Mic-2095 (melting point: 101°C), (all of the above manufactured by Nippon Seiro Co., Ltd.); and Suntight SW

(manufactured by Seiko Chemical Co., Ltd., melting point: 100 to 120°C). One type of the paraffin wax (B) may be used alone, or two or more types may be used in combination.

The content of the paraffin wax (B) in 100 parts by mass of rubber components (i.e. total amount of the polymer (A) and other rubber components) contained in the polymer composition is preferably 0.5 parts by mass or more, more preferably 1.0 parts by mass or more, and still more preferably 1.1 parts by mass or more, from the viewpoint of sufficiently obtaining the effect of improving the processability during kneading of the polymer composition. Further, the content of the paraffin wax (B) in 100 parts by mass of rubber components contained in the polymer composition is preferably 5 parts by mass or less, more preferably 2.5 parts by mass or less, and still more preferably 2 parts by mass or less, in order to maintain good rubber elasticity.

Although the details of the mechanism for improving the processability of the polymer composition during kneading by including the paraffin wax (B) together with the polymer (A) in the polymer composition are not clear, it is presumed that the paraffin wax having a melting point above a predetermined temperature disrupts the crystallinity of the polymer (A) to improve the processability of the polymer composition.

- Cross-linking agent

A cross-linked product according to this embodiment is formed by heat treatment. The type of the cross-linking agent included in the polymer composition to perform the heat treatment is not particularly limited. Specific examples of the cross-linking agent include organic peroxides, phenol resins, sulfur, sulfur compounds, p-quinones, derivatives of p-quinone dioximes, bismaleimide compounds, epoxy compounds, silane compounds, amino resins, polyols, polyamines, triazine compounds, and metal soaps. Of these, at least one selected from the group consisting of organic peroxides, phenol resins, and sulfur is preferable. One type of the cross-linking agent may be used alone, or two or more types may be used in combination.

Examples of the organic peroxide include 1,3-bis(t-butylperoxyisopropyl)benzene, 2,5-dimethyl-2,5-bis(t-butylperoxy)hexyne-3, 2,5-dimethyl-2,5-bis(t-butylperoxy)hexene-3, 2,5-dimethyl-2,5-bis(t-butylperoxy) hexane, 2,2'-bis(t-butylperoxy)-p-isopropylbenzene, dicumyl peroxide, di-t-butyl peroxide, and t-butyl peroxide.

Examples of the phenolic resin include p-substituted phenolic compounds represented by formula (8), o-substituted phenol-aldehyde condensates, m-substituted phenol-aldehyde condensates, and brominated alkylphenol-aldehyde condensates. Of these, p-substituted phenolic compounds are preferred.

[F8]

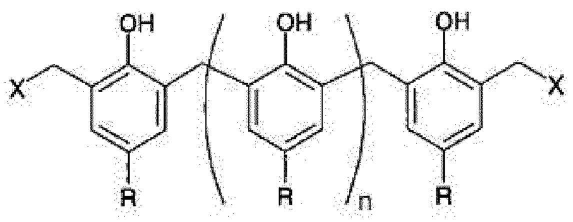

(8)

In formula (8), X represents a hydroxyl group, a halogenated alkyl group, or a halogen atom; R represents a C1 to C15 monovalent saturated hydrocarbon group; and n is an integer of 0 to 10. The p-substituted phenolic compound can be prepared through condensation reaction between p-substituted phenol and an aldehyde (preferably formaldehyde) in the presence of an alkali catalyst.

Examples of commercially available phenolic resins include product name "Tackirol 201" (alkylphenol-formaldehyde resin, manufactured by Taoka Chemical Company, Limited), product name "Tackirol 250-I" (brominated alkylphenol-formaldehyde resin (percent bromination: 4%), manufactured by Taoka Chemical Company, Limited), product name "Tackirol 250-III" (brominated alkylphenol-formaldehyde resin, manufactured by Taoka Chemical Company, Limited), product name "PR-4507" (manufactured by Gun Ei Chemical Industry Co., Ltd.), product name "ST137X" (manufactured by Rohm & Haas Company), product name "Sumilite Resin PR-22193" (manufactured by Sumitomo Durez Co., Ltd.), product name "Tamanol 531" (manufactured by Arakawa Chemical Industries, Ltd.), product name "SP1059," product name "SP1045," product name "SP1055," and product name "SP1056" (manufactured by Schenectady), and product name "CRM-0803" (manufactured by Showa Union Gosei Co., Ltd.). Of these, "Tackirol 201" is preferably used.

The amount of the crosslinking agent is preferably 0.01 to 20 parts by mass, more preferably 0.1 to 15 parts by mass, still more preferably 0.5 to 10 parts by mass, With respect to 100 parts by mass of the total amount of the rubber components contained in the polymer composition. As used herein, the term "rubber component" included in the polymer composition means a polymer capable of obtaining a cured product that exhibits rubber elasticity by thermosetting. At room temperature, the cured product exhibits properties of undergoing a large deformation by a small force (for example, a

two-fold deformation or more when stretched at room temperature), and rapidly returning to almost its original shape when the force is removed.

In the case of using an organic peroxide as cross-linking agent, the amount of the organic peroxide used is preferably 0.05 to 10 parts by mass, more preferably 0.1 to 5 parts by mass, with respect to 100 parts by mass of the total rubber components contained in the polymer composition. With an amount of the organic peroxide for use set to 10 parts by mass or less, the degree of cross-linking can be appropriately increased, so that the mechanical properties of the cross-linked product can be further improved. Also, it is preferable that the amount of the organic peroxide for use be set to 0.05 parts by mass or more, because the degree of cross-linking can be sufficiently increased, so that the rubber elasticity and mechanical strength of the cross-linked product can be further improved.

In the case of using a phenol resin as cross-linking agent, the amount of the phenol resin used is preferably 0.2 to 10 parts by mass, more preferably 0.5 to 5 parts by mass, with respect to 100 parts by mass of the total rubber components contained in the polymer composition. With an amount of the phenol resin for use set to 10 parts by mass or less, the molding processability tends to be sufficiently ensured. On the other hand, with an amount of the phenol resin for use set to 0.2 or more, the degree of cross-linking can be sufficiently increased, so that the rubber elasticity and mechanical strength of the cross-linked product can be ensured.

In the case of using sulfur as cross-linking agent, the amount of sulfur used is preferably 0.1 to 5 parts by mass, more preferably 0.5 to 3 parts by mass, with respect to 100 parts by mass of the total rubber components contained in the polymer composition.

Use of at least one of a cross-linking aid and a cross-linking accelerator together with the cross-linking agent is preferred, because the cross-linking reaction can be carried out gently to form a uniform cross-linking. In the case of using an organic peroxide as cross-linking agent, use of the following as cross-linking aid is preferred: sulfur, a sulfur compound (powdered sulfur, colloidal sulfur, precipitated sulfur, insoluble sulfur, surface-treated sulfur, dipentamethylene thiuram tetrasulfide, etc.), an oxime compound (p-quinone oxime, p,p'-dibenzoyl quinone oxime, etc.), polyfunctional monomers (ethylene glycol di(meth)acrylate, diethylene glycol di(meth)acrylate, triethylene glycol di(meth)acrylate, tetraethylene glycol di(meth)acrylate, polyethylene glycol di(meth)acrylate, trimethylol propane tri(meth)acrylate, diallyl phthalate, tetraallyl oxyethane, triallyl cyanurate, N,N'-m-phenylene bismaleimide, N,N'-m-toluylene bismaleimide, maleic anhydride, divinylbenzene, zinc di(meth)acrylate, etc.). In particular, p,p'-dibenzoyl quinone oxime, N,N'-m-phenylene bismaleimide, and divinylbenzene are preferred. One type of these may be used alone, or two or more types may be used in combination. Incidentally, since N,N'-m-phenylene bismaleimide exhibits an action as cross-linking agent, it may be also used alone as cross-linking agent.

In the case of using an organic peroxide as cross-linking agent, the amount of the cross-linking aid used is preferably 10 parts by mass or less, more preferably 0.2 to 5 parts by mass, with respect to 100 parts by mass of the total rubber components contained in the polymer composition. With an amount of the cross-linking aid for use set to 10 parts by mass or less, the degree of cross-linking can be appropriately increased, so that the molding processability tends to be sufficiently ensured.

In the case of using a phenol resin as cross-linking agent, use of a metal halide (stannous chloride, ferric chloride, etc.), an organic halide (chlorinated polypropylene, butyl bromide rubber, chloroprene rubber, etc.), etc. as cross-linking accelerator is preferred, because the cross-linking rate can be adjusted. Further, it is more preferred to use a dispersant including a metal oxide such as zinc oxide and stearic acid in addition to the cross-linking accelerator.

The polymer composition of the present disclosure may contain, in addition to the polymer (A), a rubber component different from the polymer (A) (hereinafter, also referred to as "other rubber component") as long as the effect of the present disclosure is not impaired. The type of such other rubber component is not particularly limited, and examples thereof may include butadiene rubber (BR; for example, high-cis BR having 90% or more of cis-1,4 bonds, syndiotactic-1,2-polybutadiene (SPB) -containing BR, and the like), styrene butadiene rubber (SBR), natural rubber (NR), isoprene rubber (IR), styrene isoprene copolymer rubber, butadiene isoprene copolymer rubber, and the like. More preferably, other rubber component is at least one selected from the group consisting of NR, BR, and SBR. The blending ratio of other rubber component is preferably 50 parts by mass or less, and more preferably 30 parts by mass or less, with respect to 100 parts by mass of the total amount of the rubber components (polymer (A) and other rubber components) contained in the polymer composition.

The polymer composition of the present disclosure may contain a resin component together with the rubber component. The type of the resin component is not particularly limited, and examples thereof include polyolefin resins such as polyethylene and polypropylene. In the case where the polymer composition contains the resin component, the blending ratio of the resin component is preferably 1 to 50 parts by mass, and more preferably 5 to 40 parts by mass, with respect to 100 parts by mass of the total amount of the rubber component contained in the polymer composition.

In the polymer composition of the present disclosure, various reinforcing fillers such as carbon black, silica, clay, and calcium carbonate may be used as filler. Preferably, carbon black, silica, or a combination of carbon black and silica is used. Silica is preferred from the viewpoint of static to dynamic ratio, and carbon black is preferred from the viewpoint of the strength of the cross-linked product. Examples of silica include wet silica (hydrous silicic acid), dry silica (silicic anhydride),

and colloidal silica, and in particular, wet silica is preferred. Examples of carbon black include furnace black, acetylene black, thermal black, channel black, and graphite, and in particular, furnace black is preferred.

The amount of the filler to be added may be appropriately determined according to the purpose of use, being, for example, 5 to 150 parts by mass with respect to 100 parts by mass of the rubber component included in the polymer composition. The total amount of silica and carbon black in the polymer composition is preferably 20 to 130 parts by mass, more preferably 25 to 110 parts by mass, with respect to 100 parts by mass of the total amount of the rubber components contained in the polymer composition.

In addition to the above-described component, the polymer composition of the present disclosure may also contain various additives generally used in polymer compositions for obtaining vulcanized rubber for various purposes, such as for tires, hoses, anti-vibration, and belts. Examples of these additives include an antioxidant, zinc oxide, stearic acid, a softening agent, sulfur, and a vulcanization accelerator. The blending ratios of these components can be appropriately selected depending on the type of additive as long as the effect of the present disclosure is not impaired.

<Cross-linked product and Tire>

<Crosslinking step>

When producing a rubber molded product by using the polymer composition of the present disclosure, usually, the polymer composition is molded into a predetermined shape and then subjected to a crosslinking treatment. The rubber molded product can be produced according to a conventional method. For example, in the production of a tire, the above-described polymer composition is mixed using a mixing machine such as a roll or a mixer, and molded into a predetermined shape. The obtained molded body is placed on an outer side according to a conventional method, vulcanized and molded to form one or both of the tread and the sidewall, thereby obtaining a pneumatic tire. When the rubber molded product is produced, the above-described cross-linking agent and cross-linking aid may be used.

The cross-linked product described above has high strength and excellent processability as well as excellent wear resistance, fuel consumption and ozone resistance. It can be therefore applied to various rubber molded products. Specifically, it can be used as material for tire treads and sidewalls; anti-vibration rubbers for industrial machinery, equipment, etc.; diaphragms, rolls, and various hoses such as radiator hoses and air hoses as well as hose covers; seals such as packing, gaskets, weather strips, O-rings and oil seals; belts such as power transmission belts; and linings, dust boots, etc. Among them, the cross-linked product is suitably used as a tire member, an anti-vibration member, and a belt member, and more suitably used as a tire member.

Examples

The present disclosure is specifically described with reference to examples as follows, though the present disclosure is not limited to these examples. Unless otherwise specified, the word "part(s)" and the symbol "%" described in the examples and comparative examples refer to "part(s) by mass" and "% by mass", respectively. The methods for measuring the various physical property values are shown as follows.

[Weight average molecular weight of polymer]: Determined in terms of polystyrene from the retention time corresponding to the apex of the maximum peak of a GPC curve obtained by gel permeation chromatography (GPC) (HLC-8120GPC (product name (manufactured by Tosoh Corporation))).

(GPC conditions)

Columns: 2 columns, product name "GMHXL"

(manufactured by Tosoh Corporation)

Column temperature: 40°C
Mobile phase: tetrahydrofuran
Flow rate: 1.0 ml/min
Sample concentration: 10 mg/20 ml
[Hydrogenation ratio (%)] and [$\alpha$]:
Determined by $^1$H-NMR at 500 MHz.

<Production of highly saturated diene-based polymer>

[Production Example 1: Synthesis of catalyst A]

A 1-L volume three-necked flask equipped with a stirrer and a dropping funnel was purged with dry nitrogen, and charged with 200 ml of anhydrous tetrahydrofuran and 0.2 mol of tetrahydrofurfuryl alcohol. Then, an n-butyllithium/cyclohexane solution (0.2 mol) was added dropwise to the three-necked flask at 15°C to carry out a reaction so as to obtain a tetrahydrofuran solution of tetrahydrofurfuryloxylithium.

Next, a 1-L volume three-necked flask equipped with a stirrer and a dropping funnel was purged with dry nitrogen, and charged with 49.8 g (0.2 mol) of bis(η5-cyclopentadienyl)titanium dichloride and 250 ml of anhydrous tetrahydrofuran. Then, the tetrahydrofuran solution of tetrafurfuryloxylithium obtained by the method described above was added dropwise for about 1 hour while stirring at room temperature. After about 2 hours, a reddish brown liquid was removed by filtration and the insoluble portion was washed with dichloromethane.

Then, the solvent in the filtrate and in the washing solution was removed under reduced pressure to obtain a catalyst A [bis(η5-cyclopentadienyl)titanium (tetrahydrofurfuryloxy)chloride] (also referred to as "[chlorobis(2,4-cyclopentadienyl)titanium(IV) tetrahydrofurfuryl alkoxide]"). The yield was 95%.

[Production Example 2: Synthesis of hydrogenated conjugated diene-based polymer A]

An autoclave reaction vessel having an internal volume of 10 liters was purged with nitrogen and charged with 5000 g of cyclohexane, 150 g of tetrahydrofuran, 250 g of styrene, and 730 g of 1,3-butadiene. The temperature of the contents in the reaction vessel was adjusted to 10°C, and then a cyclohexane solution including n-butyllithium (11.6 mmol) was added to initiate polymerization. The polymerization was carried out under adiabatic conditions, and the maximum temperature reached 85°C.

When the polymerization conversion rate reached 99%, 20 g of butadiene was added, and polymerization was carried out for further 1 minute. Then, 0.09 g of silicon tetrachloride was added for further reaction for 5 minutes. Subsequently, to the obtained reaction solution, 8.5 g of N,N-bis(trimethylsilyl)aminopropylmethyldiethoxysilane was then added, and the reaction was carried out for 30 minutes.

Subsequently, the temperature of the reaction solution was controlled at 80°C or more, and the hydrogen was introduced into the system. Then, 0.32 g or the catalyst A and 0.39 g of tetrachlorosilane were added thereto. The reaction was carried out for 55 minutes, such that the hydrogen pressure was kept at 1.0 MPa. After the reaction, the reaction solution returned to normal temperature and normal pressure was pulled out from the reaction vessel, so that a polymer solution was obtained.

Next, an aqueous solution (temperature: 80°C) adjusted to pH 8.5 (pH at 80°C according to a glass electrode method) with ammonia, which is a pH adjuster, was placed in a desolvation tank. The above polymer solution was further added thereto (in a ratio of 200 parts by mass of the aqueous solution to 100 parts by mass of the polymer solution), and desolvation was performed by steam stripping (steam temperature: 190°C) for 2 hours at a temperature of the liquid phase of the desolvation tank of 95°C. Drying was then carried out using a heat roll adjusted to 110°C to obtain a hydrogenated conjugated diene-based polymer A. The weight average molecular weight Mw of the hydrogenated conjugated diene-based polymer A was $28\times10^4$, and the degree of hydrogenation was 91% ($\alpha$=0.91).

[Production Example 3: Synthesis of hydrogenated conjugated diene-based polymer S]

An autoclave reaction vessel having an internal volume of 5 liters was purged with nitrogen and charged with 2750 g of cyclohexane, 50 g of tetrahydrofuran, 125 g of styrene, and 365 g of 1,3-butadiene. The temperature of the contents in the reaction vessel was adjusted to 10°C, and then a cyclohexane solution including n-butyllithium (5.80 mmol) was added to initiate polymerization. The polymerization was carried out under adiabatic conditions, and the maximum temperature reached 85°C.

When the polymerization conversion rate reached 99%, 10 g of butadiene was added, and polymerization was carried out for further 1 minutes. To the obtained reaction solution, 4.25 g of N,N-bis(trimethylsilyl)aminopropylmethyldiethoxysilane was then added, and the reaction was carried out for 30 minutes. To the resulting polymer solution, 2.0 g of 2,6-di-tert-butyl-p-cresol was added. Subsequently, the solvent was removed by steam stripping using hot water adjusted to pH=9 with sodium hydroxide, and the rubber was dried with a heat roll adjusted to 110°C to obtain a hydrogenated conjugated diene-based polymer S. The weight average molecular weight Mw of the hydrogenated conjugated diene-based polymer S was $29\times10^4$. Incidentally, the hydrogenated conjugated diene-based polymer S has $\alpha$=0.

<Production of polymer composition and evaluation of properties thereof>

[Examples 1 to 5 and Comparative Examples 1 to 3]

Using a plastomill (internal capacity: 250 cc) equipped with a temperature control device, a first stage of kneading was carried out by kneading the hydrogenated conjugated diene-based polymer A, the conjugated diene-based polymer

S, natural rubber, silica, carbon black, paraffin wax, a silane coupling agent, stearic acid, an antioxidant, and zinc oxide according to the formulations of the following Table 1 under conditions at a filling rate of 72% and a rotation speed of 60 rpm, so as to obtain compounds. Subsequently, as a second stage of kneading, after cooling the compounds obtained above to room temperature, sulfur and a vulcanization accelerator were added thereto, and the resultants were kneaded. The kneaded products were molded, and vulcanized at 160°C for a predetermined time with a vulcanization press. The following properties (1) to (5) were evaluated.

(1) Mooney viscosity (MV)

In accordance with JIS K6300-1: 2013, a kneaded product before vulcanization as measurement sample was subjected to measurement using an L rotor under conditions with a preheating time of 1 minute, a rotor operating time of 4 minutes, and a temperature of 100°C. An index value of 100 corresponds to the level in Comparative Example 1, and the larger the value, the better the processability of the polymer composition.

(2) Tensile test

From the vulcanized rubber sheet as measurement sample, a No. 3 dumbbell type test piece was prepared in accordance with JIS K6251: 2010, and a 100% elongation modulus (M100) was measured. An index value of 100 corresponds to the level in Comparative Example 1, and the larger the value, the higher the strength.

(3) Wear resistance

The vulcanized rubber as measurement sample was subjected to measurement in accordance with JIS K 6264-2: 2005 using a DIN wear tester (manufactured by Toyo Seiki Seisaku-sho, Ltd.), at 25°C with a load of 10 N. An index value of 100 corresponds to the level in Comparative Example 1, and the larger the value, the better the wear resistance.

(4) Ozone resistance test

A test piece prepared from the vulcanized rubber as measurement sample (length: 60 mm, width: 10 mm, thickness: 2.0 mm) was attached to an extension jig in accordance with JIS K6259-1: 2015, subjected to a tensile strain of 20%, and left standing in an ozone concentration of 0.5 ppm for 48 hours to perform a static ozone deterioration test (atmosphere temperature 40°C). The sample after the test was observed and evaluated according to the following.

<Evaluation based on crack size>

0: No cracks are present.
1: Cracks that cannot be seen with naked eye but can be observed when enlarged are present.
2: Very small cracks of 0.5 mm or less that can be seen with naked eye are present.
3: Cracks larger than those in the above 2 are present.

<Evaluation by crack density>

S: Cracks are present at a very low density.
F: Cracks are present at a relatively low density.
N: Cracks are present at a higher density than F.

In Table 1, for example, notation "1S" indicates that the size of the cracks is evaluated as "1", and the density of cracks is evaluated as "S".

(5) Low fuel consumption (70°C tanδ)

The vulcanized rubber as measurement sample was subjected to measurement using ARES-RDA (manufactured by TA Instruments) under conditions with a shear strain of 1.0% and an angular velocity of 100 radians per second at 70°C. An index value of 100 corresponds to the level in Comparative Example 1, and the larger the value, the better the

rolling resistance (low fuel consumption performance) with smaller energy loss.

The results of property evaluations in Examples 1 to 5 and Comparative Examples 1 to 3 are shown in Table 1.

[Table 1]

| | Example 1 | Example 2 | Example 3 | Example 4 | Comparative Example 1 | Comparative Example 2 | Example 5 | Comparative Example 3 |
|---|---|---|---|---|---|---|---|---|
| <Formulation (phr)><br>Rubber component: | | | | | | | | |
| Hydrogenated SBR (polymer A) | 60 | 60 | 60 | 60 | 60 | 60 | 80 | 80 |
| SBR (polymer S) | 20 | 20 | 20 | 20 | 20 | 20 | - | - |
| NR | 20 | 20 | 20 | 20 | 20 | 20 | 20 | 20 |
| Other components: | | | | | | | | |
| Silica | 70 | 70 | 70 | 70 | 70 | 70 | 70 | 70 |
| Carbon black | 5 | 5 | 5 | 5 | 5 | 5 | 5 | 5 |
| Suntight SW | 2 | - | - | 5 | - | - | 2 | - |
| Hi-Mic-1090 | - | 2 | - | - | - | - | - | - |
| Hi-Mic-1070 | - | - | 2 | - | - | - | - | - |
| Sunknock | - | - | - | - | 2 | - | - | - |
| Silane coupling agent | 3.6 | 3.6 | 3.6 | 3.6 | 3.6 | 3.6 | 3.6 | 3.6 |
| Stearic acid | 2 | 2 | 2 | 2 | 2 | 2 | 2 | 2 |
| Antioxidant | 1 | 1 | 1 | 1 | 1 | 1 | 1 | 1 |
| Zinc oxide | 3 | 3 | 3 | 3 | 3 | 3 | 3 | 3 |
| Vulcanization acceleraror CZ | 1.8 | 1.8 | 1.8 | 1.8 | 1.8 | 1.8 | 1.8 | 1.8 |
| Vulcanization acceleraror D | 1.5 | 1.5 | 1.5 | 1.5 | 1.5 | 1.5 | 1.5 | 1.5 |
| Sulfur | 1.5 | 1.5 | 1.5 | 1.5 | 1.5 | 1.5 | 1.5 | 1.5 |
| <Evaluation or properties><br>MV | 109 | 114 | 115 | 120 | 100 | 95 | 105 | 93 |
| M100 | 113 | 110 | 109 | 110 | 100 | 98 | 121 | 117 |
| Wear resistance | 112 | 110 | 110 | 115 | 100 | 100 | 120 | 111 |
| Ozone resistance | 1S | 1S | 0 | 0 | 0 | 2F | 0 | 1S |
| 70°C tanδ | 102 | 102 | 103 | 99 | 100 | 100 | 100 | 101 |

Details of each of the components used in Table 1 are as follows.

NR: natural rubber (RSS No. 3)
Silica: Nipsil AQ manufactured by Tosoh Silica Corporation
Carbon black: Dia Black N339 manufactured by Mitsubishi Chemical Corporation
Suntight SW: paraffin wax manufactured by Seiko Chemical Co., Ltd. (melting point: 100 to 120°C)
Hi-Mic-1090: paraffin wax manufactured by Nippon Seiro Co., Ltd. (melting point: 88°C)
Hi-Mic-1070: paraffin wax manufactured by Nippon Seiro Co., Ltd. (melting point: 80°C)
Sunknock: Paraffin wax manufactured by Ouchi Shinko Chemical Industrial Co., Ltd. (melting point: 65°C)
Silane coupling agent: Si69 manufactured by Evonik Industries
Antioxidant: Nocrack 810NA manufactured by Ouchi Shinko Chemical Industrial Co., Ltd.
Vulcanization accelerator CZ: Noxeller CZ manufactured by Ouchi Shinko Chemical industrial Co., Ltd.
Vulcanization accelerator D: Noxeller D manufactured by Ouchi Shinko Chemical Industrial Co., Ltd.

In Table 1, "-" indicates that the compound in the corresponding column was not used.

As shown in Table 1, the polymer compositions containing the highly saturated diene-based polymer and a paraffin wax having a melting point of 75°C or more (Examples 1 to 4) had more excellent processability with a higher Mooney viscosity (index) in comparison with the composition in Comparative Example 2 having the same composition as in Examples 1 to 4 except that no paraffin wax was contained. Further, according to the polymer compositions in Examples 1 to 4, vulcanized rubbers exhibiting excellent wear resistance and wear resistance were obtained in comparison with Comparative Example 2. Further, the vulcanized rubbers made from the polymer compositions in Examples 1 to 4 were also excellent in ozone resistance and low fuel consumption.

On the other hand, in Comparative Example 1 to which a paraffin wax having a melting point of 65°C was added instead of the paraffin waxes having a melting point of 75°C or more in Examples 1 to 4, the processability of the polymer composition, and the tension strength and wear resistance of the vulcanized rubber were inferior to those in Examples 1 to 4.

Further, in Example 5 to which the polymer S was not added, the processability of the polymer composition was inferior to that in Comparative Example 3 having the same composition as in Example 5 except that no paraffin wax was contained. Further, the vulcanized rubber in Example 5 was also excellent in the tensile strength, wear resistance and ozone resistance in comparison with Comparative Example 3.

From the above results, it has been found that the polymer composition containing a highly saturated diene-based polymer and a paraffin wax having a melting point of a predetermined value or more is excellent in processability, while maintaining good tensile strength, wear resistance and low fuel consumption of the vulcanized rubber.

## Claims

1. A polymer composition comprising:
a polymer (A) having, when composition ratios (molar ratios) of a structural unit represented by formula (1), a structural unit represented by formula (2), a structural unit represented by formula (3), and a structural unit represented by formula (4) in the polymer (A) are p, q, r, and s, respectively, a value $\alpha$ represented by formula (i) of 0.60 or more:

$$\alpha = (p+(0.5\times r))/(p+q+(0.5\times r)+s) \ldots (i)$$

[F1]

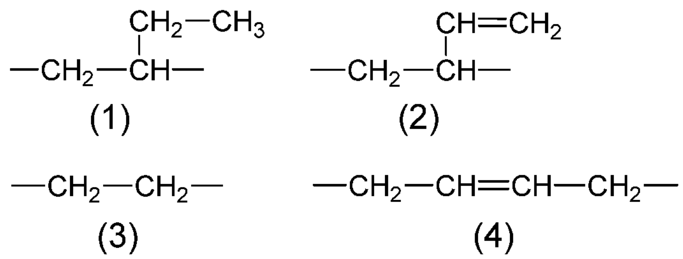
(1) (2) (3) (4)

with a weight average molecular weight (Mw) of $1.0\times10^5$ to $2.0\times10^6$ in terms of polystyrene measured by gel permeation chromatography, and a carbon-carbon unsaturated bond;

a paraffin wax (B) having a melting point of 75°C or more; and
wherein the polymer (A) is obtained by hydrogenation of a conjugated diene-based polymer, which is a random copolymer of a structural unit derived from a conjugated diene compound and a structural unit derived from an aromatic vinyl compound.

**2.** The polymer composition according to claim 1, wherein the polymer (A) has one or more functional groups selected from the group consisting of an amino group, a nitrogen-containing heterocyclic group, a phosphino group, a hydroxyl group, a thiol group and a hydrocarbyloxysilyl group.

**3.** The polymer composition according to claim 1 or 2, wherein the polymer (A) has a partial structure derived from at least one selected from the group consisting of a compound represented by formula (9), a compound represented by formula (10), a compound represented by formula (11), and a compound represented by formula (12):

[F2]

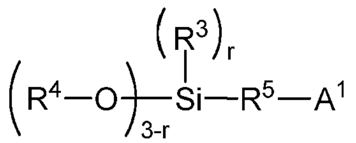

(9)

wherein, $A^1$ is a monovalent functional group having at least one atom selected from the group consisting of nitrogen, phosphorus, oxygen, sulfur and silicon, and bonding to $R^5$ through a nitrogen atom, a phosphorus atom, an oxygen atom, a sulfur atom, a silicon atom or a carbon atom in a carbonyl group, or a (thio)epoxy group; $R^3$ and $R^4$ are each independently a hydrocarbyl group; and $R^5$ is a hydrocarbylene group, and r is an integer of 0 to 2; in the case where a plurality of $R^3$ are present, the plurality of $R^3$ are the same group or different groups; in the case where a plurality of $R^4$ are present, the plurality of $R^4$ are the same group or different groups.

[F3]

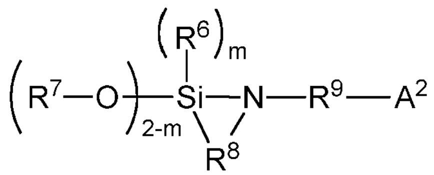

(10)

wherein, $A^2$ is a monovalent functional group having at least one atom selected from the group consisting of nitrogen, phosphorus, oxygen, sulfur and silicon, having no active hydrogen, and bonding to $R^9$ through a nitrogen atom, a phosphorus atom, an oxygen atom, a sulfur atom, or a silicon atom, or a hydrocarbyl group having 1 to 20 carbon atoms; $R^6$ and $R^7$ are each independently a hydrocarbyl group; $R^8$ is a hydrocarbylene group, $R^9$ is a single bond or a hydrocarbylene group and m is 0 or 1; in the case where a plurality of $R^7$ are present, the plurality of $R^7$ are the same group or different groups.

[F4]

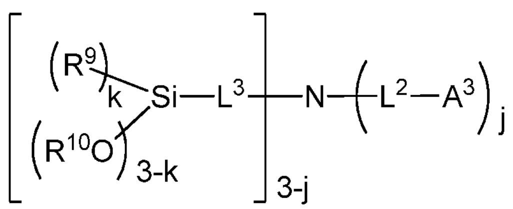

(11)

wherein $A^3$ represents a monovalent group bonding to $L^2$ through an imino group, an amido group, a(thio)carbonyl group, a (thio)carbonyloxy group, a sulfide group or a polysulfide group, or a protected primary amino group, a protected secondary amino group, a tertiary amino group, a nitrile group, a pyridyl group, a (thio)epoxy group, a (thio) isocyanate group, a (thio)formyl group, a (thio)carboxylic acid ester group, a metal salt of (thio)carboxylic acid ester group, $-COX^1$ ($X^1$: a halogen atom), an imidazolyl group, or a group represented by formula (11a); $L^2$ and $L^3$ are each

independently a single bond or a hydrocarbylene group having 1 to 20 carbon atoms, and $R^9$ and $R^{10}$ are each independently a hydrocarbyl group; k is an integer of 0 to 2, and j is 0 or 1; in the case where a plurality of identical symbols are present in the formula for each of the symbols $R^9$, $R^{10}$ and $L^3$, the groups represented by the symbols are the same or different groups from each other; in the case where a plurality of k are present in the formula, the plurality of k are the same number or different numbers.

[F5]

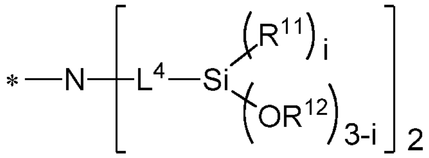

(11a)

wherein $L^4$ is a single bond or a hydrocarbylene group having 1 to 20 carbon atoms, and $R^{11}$ and $R^{12}$ are each independently a hydrocarbyl group; i is an integer of 0 to 3; "*" indicates a site that binds to $L^2$; For each of the symbols $R^{11}$, $R^{12}$ and $L^4$, the groups represented by the symbols are the same group or different group from each other; a plurality of i in the formula are the same number or different numbers.

[F6]

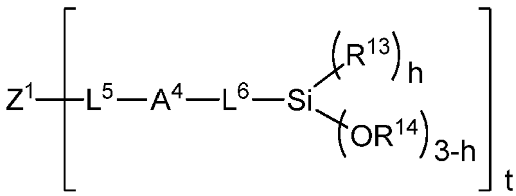

(12)

wherein $A^4$ is an imino group, an amido group, a (thio)carbonyl group or a (thio)carbonyloxy group, $Z^1$ is a t-valent group having or not having a nitrogen atom and having 1 to 20 carbon atoms, $L^5$ is a single bond or a hydrocarbylene group having 1 to 20 carbon atoms, $L^6$ is a hydrocarbylene group having 1 to 20 carbon atoms, and $R^{13}$ and $R^{14}$ are each independently a hydrocarbyl group; h is 0 or 1, and t is 2 or 3; for each of the symbols $R^{14}$, $L^5$, $L^6$ and $A^4$, the groups represented by the symbols are the same group or different groups from each other; the plurality of h in the formula are the same number or different numbers.

**4.** The polymer composition according to any one of claims 1 to 3, wherein the content of the paraffin wax (B) is 0.5 to 5 parts by mass with respect to 100 parts by mass of the rubber component comprising the polymer (A) in the polymer composition.

**5.** The polymer composition according to any one of claims 1 to 4, wherein the paraffin wax (B) has a melting point of 140°C or less.

**6.** The polymer composition according to any one of claims 1 to 5, further comprising a cross-linking agent.

**7.** A cross-linked product produced by using the polymer composition according to any one of claims 1 to 6.

**8.** A tire comprising one or both of a tread and a sidewall formed from the polymer composition according to any one of claims 1 to 6.

**Patentansprüche**

**1.** Polymerzusammensetzung, umfassend:
ein Polymer (A), das, wenn die Zusammensetzungsverhältnisse (Molverhältnisse) einer Struktureinheit, die durch die Formel (1) dargestellt ist, einer Struktureinheit, die durch die Formel (2) dargestellt ist, einer Struktureinheit, die durch die Formel (3) dargestellt ist, und einer Struktureinheit, die durch die Formel (4) dargestellt ist, in dem Polymer (A) p, q,

r bzw. s sind, einen Wert α, der durch die Formel (i) dargestellt ist, von 0,60 oder mehr:

$$\alpha = (p+(0,5\times r))/(p+q+(0,5\times r)+s) \ldots (i)$$

[F1]

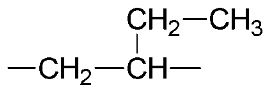

(1)

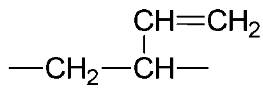

(2)

$$-CH_2-CH_2-$$

(3)

$$-CH_2-CH=CH-CH_2-$$

(4)

mit einem gewichtsmittleren Molekulargewicht (Mw) von $1{,}0\times10^5$ bis $2{,}0\times10^6$, bezogen auf Polystyrol, gemessen durch Gelpermeationschromatographie, und eine ungesättigte Kohlenstoff-Kohlenstoff-Bindung aufweist;
ein Paraffinwachs (B) mit einem Schmelzpunkt von 75°C oder mehr; und
wobei das Polymer (A) durch Hydrierung eines Polymers auf Basis konjugierter Diene erhalten wird, das ein statistisches Copolymer aus einer Struktureinheit, die von einer konjugierten Dienverbindung abgeleitet ist, und einer Struktureinheit, die von einer aromatischen Vinylverbindung abgeleitet ist, ist.

**2.** Polymerzusammensetzung nach Anspruch 1, wobei das Polymer (A) eine oder mehrere funktionelle Gruppen aufweist, die aus der Gruppe bestehend aus einer Aminogruppe, einer stickstoffhaltigen heterocyclischen Gruppe, einer Phosphinogruppe, einer Hydroxylgruppe, einer Thiolgruppe und einer Hydrocarbyloxysilylgruppe ausgewählt sind.

**3.** Polymerzusammensetzung nach Anspruch 1 oder 2, wobei das Polymer (A) eine Teilstruktur aufweist, die sich von mindestens einer Verbindung, die aus der Gruppe bestehend aus einer durch Formel (9) dargestellten Verbindung, einer durch Formel (10) dargestellten Verbindung, einer durch Formel (11) dargestellten Verbindung und einer durch Formel (12) dargestellten Verbindung ausgewählt ist, ableitet:

[F2]

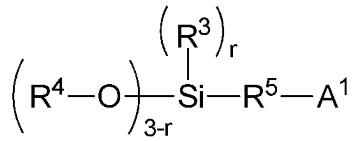

(9)

wobei $A^1$ eine monovalente funktionelle Gruppe ist, die mindestens ein Atom hat, ausgewählt aus der Gruppe bestehend aus Stickstoff, Phosphor, Sauerstoff, Schwefel und Silicium, und die an $R^5$ durch ein Stickstoffatom, ein Phosphoratom, ein Sauerstoffatom, ein Schwefelatom, ein Siliciumatom oder ein Kohlenstoffatom in einer Carbonylgruppe oder einer (Thio)epoxygruppe gebunden ist; $R^3$ und $R^4$ jeweils unabhängig voneinander eine Hydrocarbylgruppe sind; und $R^5$ eine Hydrocarbylengruppe ist, und r eine ganze Zahl von 0 bis 2 ist; in dem Fall, in dem eine Vielzahl von $R^3$ vorhanden ist, die Vielzahl von $R^3$ die gleiche Gruppe oder verschiedene Gruppen sind; in dem Fall, in dem eine Vielzahl von $R^4$ vorhanden ist, die Vielzahl von $R^4$ die gleiche Gruppe oder verschiedene Gruppen sind.

[F3]

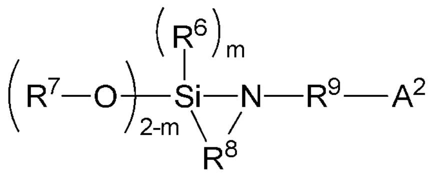

(10)

wobei $A^2$ eine monovalente funktionelle Gruppe ist, die mindestens ein Atom hat, ausgewählt aus der Gruppe bestehend aus Stickstoff, Phosphor, Sauerstoff, Schwefel und Silicium, die keinen aktiven Wasserstoff hat, und die an $R^9$ durch ein Stickstoffatom, ein Phosphoratom, ein Sauerstoffatom, ein Schwefelatom oder ein Siliciumatom gebunden ist, oder eine Hydrocarbylgruppe mit 1 bis 20 Kohlenstoffatomen ist; $R^6$ und $R^7$ jeweils unabhängig voneinander eine Hydrocarbylgruppe sind; $R^8$ eine Hydrocarbylengruppe ist, $R^9$ eine Einfachbindung oder eine Hydrocarbylengruppe ist und m gleich 0 oder 1 ist; in dem Fall, in dem eine Vielzahl von $R^7$ vorhanden ist, die Vielzahl von $R^7$ die gleiche Gruppe oder verschiedene Gruppen sind.

[F4]

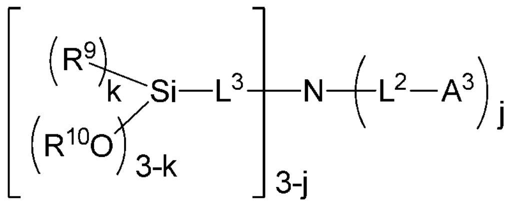

(11)

wobei $A^3$ eine monovalente Gruppe darstellt, die an $L^2$ durch eine Iminogruppe, eine Amidogruppe, eine (Thio)carbonylgruppe, eine (Thio)carbonyloxygruppe, eine Sulfidgruppe oder eine Polysulfidgruppe, oder eine geschützte primäre Aminogruppe, eine geschützte sekundäre Aminogruppe, eine tertiäre Aminogruppe, eine Nitrilgruppe, eine Pyridylgruppe, eine (Thio)epoxygruppe, eine (Thio)isocyanatgruppe, eine (Thio)formylgruppe, eine (Thio)carbonsäureestergruppe, ein Metallsalz einer (Thio)carbonsäureestergruppe, $-COX^1$ ($X^1$: ein Halogenatom), eine Imidazolylgruppe oder eine Gruppe dargestellt durch die Formel (11a) gebunden ist; $L^2$ und $L^3$ jeweils unabhängig voneinander eine Einfachbindung oder eine Hydrocarbylengruppe mit 1 bis 20 Kohlenstoffatomen sind, und $R^9$ und $R^{10}$ jeweils unabhängig voneinander eine Hydrocarbylgruppe sind; k eine ganze Zahl von 0 bis 2, und j gleich 0 oder 1 ist; in dem Fall, in dem eine Vielzahl von identischen Symbolen in der Formel für jedes der Symbole $R^9$, $R^{10}$ und $L^3$ vorhanden ist, die durch die Symbole dargestellten Gruppen die gleichen oder voneinander verschiedene Gruppen sind; in dem Fall, in dem eine Vielzahl von k in der Formel vorhanden ist, die Vielzahl von k die gleiche Zahl oder verschiedene Zahlen sind.

[F5]

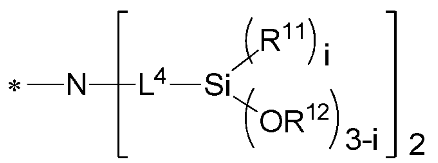

(11a)

wobei $L^4$ eine Einfachbindung oder eine Hydrocarbylengruppe mit 1 bis 20 Kohlenstoffatomen ist, und $R^{11}$ und $R^{12}$ jeweils unabhängig voneinander eine Hydrocarbylgruppe sind; i eine ganze Zahl von 0 bis 3 ist; "*" eine Stelle anzeigt, die an $L^2$ bindet; für jedes der Symbole $R^{11}$, $R^{12}$ und $L^4$ die durch die Symbole dargestellten Gruppen die gleiche Gruppe oder voneinander verschiedene Gruppen sind; eine Vielzahl von i in der Formel die gleiche Zahl oder verschiedene Zahlen sind.

[F6]

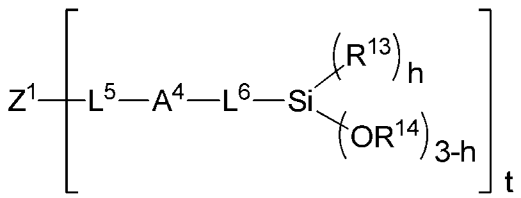

(12)

wobei $A^4$ eine Iminogruppe, eine Amidogruppe, eine (Thio)carbonylgruppe oder eine (Thio)carbonyloxygruppe ist, $Z^1$ eine t-wertige Gruppe mit oder ohne ein Stickstoffatom und mit 1 bis 20 Kohlenstoffatomen ist, $L^5$ eine Einfachbindung oder eine Hydrocarbylengruppe mit 1 bis 20 Kohlenstoffatomen ist, $L^6$ eine Hydrocarbylengruppe mit 1 bis 20 Kohlenstoffatomen ist, und $R^{13}$ und $R^{14}$ jeweils unabhängig voneinander eine Hydrocarbylgruppe sind; h gleich 0

oder 1 ist, und t gleich 2 oder 3 ist; für jedes der Symbole $R^{14}$, $L^5$, $L^6$ und $A^4$ die durch die Symbole dargestellten Gruppen die gleiche Gruppe oder voneinander verschiedene Gruppen sind; die Vielzahl von h in der Formel die gleiche Zahl oder verschiedene Zahlen sind.

**4.** Polymerzusammensetzung nach einem der Ansprüche 1 bis 3, wobei der Gehalt an Paraffinwachs (B) 0,5 bis 5 Masseteile, bezogen auf 100 Masseteile der Kautschukkomponente, die das Polymer (A) in der Polymerzusammensetzung umfasst, ist.

**5.** Polymerzusammensetzung nach einem der Ansprüche 1 bis 4, wobei das Paraffinwachs (B) einen Schmelzpunkt von 140°C oder weniger hat.

**6.** Polymerzusammensetzung nach einem der Ansprüche 1 bis 5, ferner umfassend ein Vernetzungsmittel.

**7.** Vernetztes Produkt, hergestellt unter Verwendung der Polymerzusammensetzung nach einem der Ansprüche 1 bis 6.

**8.** Reifen, umfassend eine Lauffläche und/oder eine Seitenwand, die aus der Polymerzusammensetzung nach einem der Ansprüche 1 bis 6 gebildet sind.

## Revendications

**1.** Composition de polymère comprenant :
un polymère (A) ayant, lorsque des rapports de composition (rapports molaires) d'une unité structurale représentée par la formule (1), d'une unité structurale représentée par la formule (2), d'une unité structurale représentée par la formule (3) et d'une unité structurale représentée par la formule (4) dans le polymère (A) sont p, q, r et s, respectivement, une valeur $\alpha$ représentée par la formule (i) de 0,60 ou plus :

$$\alpha = (p+(0,5\times r))/(p+q+(0,5\times r)+s) \; ... \; (i)$$

[F1]

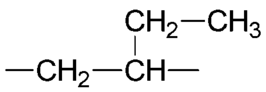
(1)

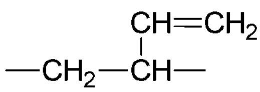
(2)

$—CH_2—CH_2—$
(3)

$—CH_2—CH{=}CH—CH_2—$
(4)

avec un poids moléculaire moyen en poids (Mw) de $1,0\times10^5$ à $2,0x10^6$ en termes de polystyrène mesuré par chromatographie par perméation de gel, et une liaison carbone-carbone insaturée ;
une cire de paraffine (B) ayant un point de fusion de 75°C ou plus ; et
dans lequel le polymère (A) est obtenu par hydrogénation d'un polymère à base de diène conjugué, qui est un copolymère aléatoire d'une unité structurelle dérivée d'un composé de diène conjugué et d'une unité structurelle dérivée d'un composé vinylique aromatique.

**2.** Composition de polymère selon la revendication 1, dans laquelle le polymère (A) a un ou plusieurs groupes fonctionnels choisis dans le groupe constitué d'un groupe amino, d'un groupe hétérocyclique contenant d l'azoté, d'un groupe phosphino, d'un groupe hydroxyle, d'un groupe thiol et d'un groupe hydrocarbyloxysilyle.

**3.** Composition de polymère selon la revendication 1 ou 2, dans laquelle le polymère (A) a une structure partielle dérivée d'au moins un composé choisi dans le groupe constitué d'un composé représenté par la formule (9), d'un composé représenté par la formule (10), d'un composé représenté par la formule (11), et d'un composé représenté par la formule (12) :

[F2]

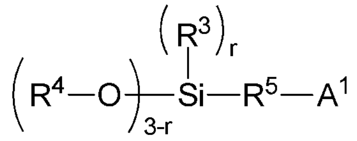

(9)

dans laquelle, $A^1$ est un groupe fonctionnel monovalent ayant au moins un atome choisi dans le groupe constitué de l'azote, du phosphore, de l'oxygène, du soufre et du silicium, et se liant à $R^5$ par un atome d'azote, un atome de phosphore, un atome d'oxygène, un atome de soufre, un atome de silicium ou un atome de carbone dans un groupe carbonyle, ou un groupe (thio)époxy ; $R^3$ et $R^4$ sont chacun indépendamment un groupe hydrocarbyle ; et $R^5$ est un groupe hydrocarbylène, et r est un nombre entier de 0 à 2 ; dans le cas où une pluralité de $R^3$ est présente, la pluralité de $R^3$ est le même groupe ou des groupes différents ; dans le cas où une pluralité de $R^4$ est présente, la pluralité de $R^4$ est le même groupe ou des groupes différents.

[F3]

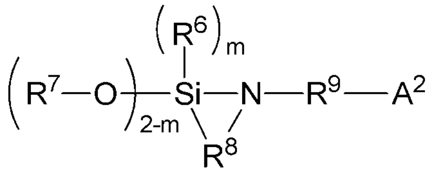

(10)

dans laquelle, $A^2$ est un groupe fonctionnel monovalent ayant au moins un atome choisi dans le groupe constitué de l'azote, du phosphore, de l'oxygène, du soufre et du silicium, n'ayant pas d'hydrogène actif, et se liant à $R^9$ par un atome d'azote, un atome de phosphore, un atome d'oxygène, un atome de soufre, un atome de silicium, ou un groupe hydrocarbyle ayant de 1 à 20 atomes de carbone ; $R^6$ et $R^7$ sont chacun indépendamment un groupe hydrocarbyle ; $R^8$ est un groupe hydrocarbylène, $R^9$ est une liaison simple ou un groupe hydrocarbylène et m est 0 ou 1 ; dans le cas où une pluralité de $R^7$ est présente, la pluralité de $R^7$ est le même groupe ou des groupes différents.

[F4]

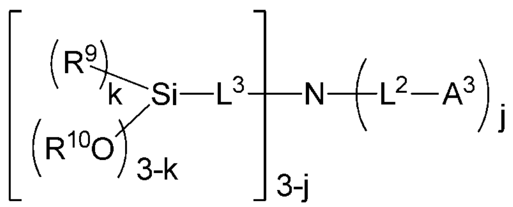

(11)

dans laquelle $A^3$ représente un groupe monovalent se liant à $L^2$ par un groupe imino, un groupe amido, un groupe (thio)carbonyl, un groupe (thio)carbonyloxy, un groupe sulfure ou un groupe polysulfure, ou un groupe amino primaire protégé, un groupe amino secondaire protégé, un groupe amino tertiaire, un groupe nitrile, un groupe pyridyle, un groupe (thio)époxy, un groupe (thio)isocyanate, un groupe (thio)formyl, un groupe ester d'acide (thio)carboxylique, un sel métallique de groupe ester d'acide (thio)carboxylique, $-COX^1$ ($X^1$ : un atome d'halogène), un groupe imidazolyle, ou un groupe représenté par la formule (11a) ; $L^2$ et $L^3$ sont chacun indépendamment une liaison simple ou un groupe hydrocarbylène ayant de 1 à 20 atomes de carbone, et $R^9$ et $R^{10}$ sont chacun indépendamment un groupe hydrocarbyle ; k est un nombre entier de 0 à 2, et j est 0 ou 1 ; dans le cas où une pluralité de symboles identiques est présente dans la formule pour chacun des symboles $R^9$, $R^{10}$ et $L^3$, les groupes représentés par les symboles sont les mêmes groupes ou des groupes différents les uns des autres ; dans le cas où une pluralité de k est présente dans la formule, la pluralité de k est le même nombre ou des nombres différents.

[F5]

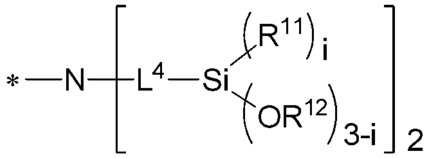

(11a)

dans laquelle $L^4$ est une liaison simple ou un groupe hydrocarbylène ayant de 1 à 20 atomes de carbone, et $R^{11}$ et $R^{12}$ sont chacun indépendamment un groupe hydrocarbyle ; i est un nombre entier de 0 à 3 ; "*" indique un site qui se lie à $L^2$ ; pour chacun des symboles $R^{11}$, $R^{12}$ et $L^4$, les groupes représentés par les symboles sont le même groupe ou un groupe différent l'un de l'autre ; une pluralité de i dans la formule est le même nombre ou des nombres différents.

[F6]

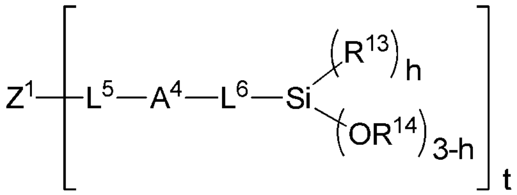

(12)

dans laquelle $A^4$ est un groupe imino, un groupe amido, un groupe (thio)carbonyl ou un groupe (thio)carbonyloxy, $Z^1$ est un groupe t-valent ayant ou non un atome d'azote et ayant de 1 à 20 atomes de carbone, $L^5$ est une liaison simple ou un groupe hydrocarbylène ayant de 1 à 20 atomes de carbone, $L^6$ est un groupe hydrocarbylène ayant de 1 à 20 atomes de carbone, et $R^{13}$ et $R^{14}$ sont chacun indépendamment un groupe hydrocarbyle ; h est 0 ou 1, et t est 2 ou 3 ; pour chacun des symboles $R^{14}$, $L^5$, $L^6$ et $A^4$, les groupes représentés par les symboles sont le même groupe ou des groupes différents les uns des autres ; la pluralité de h dans la formule est le même nombre ou des nombres différents.

4. Composition de polymère selon l'une quelconque des revendications 1 à 3, dans laquelle la teneur en cire de paraffine (B) est de 0,5 à 5 parties en masse par rapport à 100 parties en masse du composant de caoutchouc comprenant le polymère (A) dans la composition de polymère.

5. Composition de polymère selon l'une quelconque des revendications 1 à 4, dans laquelle la cire de paraffine (B) a un point de fusion de 140°C ou moins.

6. Composition de polymère selon l'une quelconque des revendications 1 à 5, comprenant en outre un agent de réticulation.

7. Produit réticulé produit en utilisant la composition de polymère selon l'une quelconque des revendications 1 à 6.

8. Pneu comprenant une ou les deux d'une bande de roulement et d'un flanc formés à partir de la composition de polymère selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019158854 A
- US 2019264012 A
- WO 2015064646 A
- WO 2014133097 A
- WO 2015190073 A
- JP 63004841 A
- JP 1037970 A